(19) Europäisches Patentamt
European Patent Office
Office européen des brevets

(11) **EP 3 385 689 A1**

(12) **EUROPÄISCHE PATENTANMELDUNG**

(43) Veröffentlichungstag:
**10.10.2018 Patentblatt 2018/41**

(51) Int Cl.:
***G01K 15/00*** *(2006.01)*

(21) Anmeldenummer: **17000573.0**

(22) Anmeldetag: **05.04.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Suess, Dieter**
**1200 Wien (AT)**

(72) Erfinder: **Suess, Dieter**
**1200 Wien (AT)**

(54) **METHODE ZUR KALIBRIERUNG VON SEMI-PASSIVEN DRAHTLOSEN RFID TEMPERATUR SENSOREN**

(57) Die Messung von Temperaturen insbesondere die Detektion der Überschreitung beziehungsweise Unterschreitung einer kritischen Temperatur Ist für viele Bereiche von großer Bedeutung. Die Erfindung löst das Problem, durch eine vereinfachte Kalibrierung von semi-passiven RFI D Temperatursensoren. Dadurch kann mit weit höherer Genauigkeit die Temperatur mit preisgünstigen RFID Temperatursensoren bestimmt werden. Der Speicher wird genutzt um Temperaturkalibrierungsdaten und Zeitkalibrierungsdaten zu speichern. Die drahtlose Auslesbarkeit von RFID Sensoren wird genutzt um die Kalibration für große Stückzahlen durchführen zu können, die alle in der Lese und Schreibreichweite des RFID Lesegeräts sind. Die Speicherung der Temperatur als Funktion der Zeit wird genutzt um Temperaturdaten zu ermitteln die mit extern bekannten Daten verglichen werden und die Differenz dieser Temperaturen zur Temperaturkalibrationen dienen.

Fig. 1

EP 3 385 689 A1

**Beschreibung**

Die Erfindung betrifft die Überwachung von Temperaturen und insbesondere eine dafür geeignete Methode entsprechend dem einleitenden Teil des Anspruches 1.

Die Messung von Temperaturen insbesondere die Detektion der Überschreitung beziehungsweise Unterschreitung einer kritischen Temperatur ist für viele Bereiche von großer Bedeutung. Für Produkthaftungsfragen sowie Prozessüberwachung kann bei Wissen über kritische Temperaturen die überschritten bzw. unterschritten wurden, Aussagen getroffen werden ob Grenzwerte eingehalten wurden.

So ist beispielsweise die Temperaturmessung bei Lebensmitteltransporten und Medikamententransporten essentiell, wo die Einhaltung der vorgeschriebenen Toleranzen der Temperatur protokolliert werden muss. Ist für die Überwachung der Kühlkette nicht die aktuelle Temperatur von Interesse, sondern die Frage, ob die Temperatur des Produkts während des gesamten Logistikprozesses einen zulässigen Maximalwert bzw. Minimalwert überschritten hat wurden verschiedene Methoden vorgeschlagen.

Wenngleich es hinlänglich bekannt ist Sensoren einem bekannten Temperaturprofil als Funktion der Zeit auszusetzen und die in einem Speicher abgelegten Temperaturdaten für die Kalibrierun heranzuziehen, wie beispielsweise in D1: US 2015/110147 A1 in den Absätzen [01 03] bis [0126] beschrieben ist, unterscheidet sich der Kalibrierungsablauf der Erfindung signifikant. Aus D1 Absatz [0103] bis [0126] ist ersichtlich, dass unmittelbar nach der "Temperatur Control/Mesurement" (8003) aus D1 die Kalibrierungstabelle erstellt wird. Dies ist signifikant unterschiedlich zu der Erfindung. In der Erfindung wird nach Prozessschritt (8003) aus D1 die Temperaturkurve in den Speicher des RFID Sensor geschrieben. Erst nach Durchlauf des vorgegebenen Kalibrierungstemperaturverlaufes werden alle Kalibrierungsdaten durch ein Lesegerät via RF übermittelt. Danach wird die Kalibrierungstabelle erstellt und diese wieder via RF auf den Sensor gespeichert.

In der Patentschrift D2: WO 2009/138893 A1 wird ein Verfahren vorgeschlagen, beidem die Sensoren vor der Nutzung bekannten Bedingungen ausgesetzt werden und diese bekannten Bedingungen als auch die gemessenen Werte in eine Kalibrierungsdatei gespeichert werden. Im Gegensatz zu D2 wird in der Erfindung nicht der Output des Sensors gemessen und dieser gemeinsam mit den bekannten Bedingungen in eine Kalibrierungsdatei geschrieben. Es wird der RFID Sensor aktiviert die Daten in den internen Speicher geschrieben. Zu diesem Zeltpunkt sind die aktuellen Bedingungen noch nicht dem Sensor bekannt. Erst nachdem alle aufgezeichneten Datenpunkte geschrieben sind, werden diese zu einem späteren Zeitpunkt via RF an ein Ausiesegerät gesendet Weiters werden in der eingereichten Patentanmeldung Im Gegensatz zu D2 keine initialen Bedingungen bei dem Endanwender benötigt, sondern ein wohldefinierter Temperaturverlauf vorgegeben und die Referenzdaten nicht vor der Exposition zur Umgebung übermittelt.

Die Anmeldung D3: WO 03/098175 A1 beschreibt eine Kalibrierungsmethode bei der die Periode der Encoder Pulse von der Temperatur abhängen, und durch die Wechselwirkung eines aktiven Master Tags mit einem passiven Slave Tag die Kalibrierung durchgeführt wird. Im Gegensatz zu D3 wird in der Erfindung für die Kalibrierung nur ein aktiver RFID Tag benötigt und ein Referenztemperatursensor. Somit beschreibt die Erfindung ein signifikant unterschiedliches Sensorsystem und eine unterschiedliche Kalibrierungsmethode.

In D4: EP 2083 254 A1 wird eine spezielle Kalibrierungsmethode beschrieben die nur für eine Temperaturreferenz ($T_{ref}$) durchgeführt werden kann. Die Kalibrierungsmethode aus D4 ist geeignet für Sensor, bei denen die Signalfrequenz von der Temperatur abhängt und eine veränderte Frequenz ein Maß für die Temperaturänderung ist. Die Erfindung bietet einen signifikanten Vorteil, da diese sowohl für Temperatursensoren geeignet ist bei denen das Messsignal auf Grund einer Widerstandsänderung detektiert wird als auch eine Kalibrierungsmethode mit N Temperaturpunkten ermöglicht.

In D5: DE 196 22 671 A1 ist eine Vorrichtung zur irreversiblen Anzeige zeitweiliger Überschreitung der zulässigen Temperatur beschrieben. Dieser Sensor beinhaltet ein Medium mit einem Schmelzpunkt, das gerade oberhalb der zulässigen Lagertemperatur liegt. Im Gegensatz zu D5 wird in der Erfindung ein digitales System verwendet, welches sowohl bezüglich Genauigkeit und Handhabung signifikante Vorteile bietet.

In D6: (B. Bergmair, J. Liu, T. Huber, O. Gutfleisch, D. Suess "Wreless and passive temperature indicator utilizing the large hysteresis of magnetic shape memory alloys."

Applied Physics Letters, vol 101.4, 2012, p. 042412) wird ein System beschrieben bei dem die Resonanzfrequenz eines magneto-akustischen Plättchens durch die Veränderung der Eigenschaft von "Shape-Memory"-Alloys verändert wird. Dieser Sensorkann nur mittels eines speziellen Lesegeräts ausgelesen werden. Im speziellen wird ein Signal mit der Frequenz von ca, 58 KHz ausgesandt. Die Lese/Sendeeinheit benötigt auf Grund der geringen Frequenz relative große laterale Abmessungen. Weiters besteht in diesem System nicht die Möglichkeit mit dem Sensorsignal eine ID mitzuschicken, welches für viele Anwendungen von Notwendigkeit ist.

Die Erfindung hat die Aufgabe, dieses Problem zu lösen und schlägt dazu vor, mittels RFID System semipassiv die aktuelle Temperatur mit hoher Genauigkeit zu detektieren und auf einem internen EPROM Speicher zu speichem.

Obwohl Preisgünstige semi-passive RFID Temperatursensoren existieren, wie beispielsweise der SL900A oder SI13a von der Firma AMS, sind diese nach der Erzeugung nicht geeignet um mit genügend hoher Genauigkeit Temperaturen zu detektieren. So haben Messungen gezeigt, dass diese Sensoren eine Ungenauigkeit Im Bereich zwischen -20°C und 20°C haben, welche bis zu +-5°C liegt. Dies ist für die meisten Anwendungen nicht ausreichend. Der Grund ist, dass diese Sensoren nur bei einer bestimmten Temperatur kalibriert sind. Eine Kalibration bei der Produktion bei einem anderen Temperaturbereich ist mit Standardmethoden technisch sehr Aufwendig und wird deshalb bei den besagten Sensoren nur bei einer Temperatur durchgeführt Dadurch ergeben sich große Temperaturungenauigkeiten bei Temperaturen, die nicht nahe der Kalibrierungstemperetur liegen.

Die Erfindung hat zum Ziel dieses Problem zu lösen, und schlägt vor die drahtlose Auslesung der Sensoren zu Nutzen um die Kalibrierung der Sensoren zu vereinfachen. Weiters erlaubt die vorgeschlagene Methode gleichzeitig eine Vielzahl von Sensoren zu kalibrieren.

In einer Ausprägung der vorgeschlagenen Methode wird eine bestimmte Anzahl von Sensoren In einen Klimaschrank gebracht. Ein Klimaschrank zeichnet sich dadurch aus, dass er ein äußerst homogenes räumliches Temperaturprofil besitzt. Weiters können verschiedene Temperaturprofile als Funktion der Zeit eingestellt werden. Die vereinfachte Kalibrierung sieht nun in dieser Ausprägung vor, die Sensoren bevor sie oder nachdem sie in den Klimaschrank gebracht werden zu aktivieren. Das heißt in bestimmten Zeitpunkten misst der RFID Chip die aktuelle Temperatur und legt den Temperaturwert, die aktuelle Zeit und eventuell weiter Größen wie Batteriespannung im Speicher (z.b. EEPROM) ab. So kann nun auch die Temperatur Im Klimaschrank geändert werden um eine Vielzahl von Kalibrierungspunkten zu realisieren.

Nachdem das gewünschte Tempereturprofil im Klimaschrank durchlaufen wurde um genügend Kalibrierungspunkte zu erhalten, werden die gespelcherten Temperaturwerte der Sensoren entweder im Klimaschrank oder nach Entnahme aus dem Klimaschrank durch ein drahtloses Lesegerät via "radio-frequency" RF ausgelesen. Bevorzugte RF Trägerfrequenzen sind zwischen 12 MHz - 14 MHz (NFC) und 860-970 MHz (UHF). Da die zeitliche Entwicklung der Temperatur im Klimaschrank bekannt ist, kann diese nun mit dem am RFID-Chip gespeicherten Temperaturpunkten verglichen werden. Verschiedene Kalibrierungsmethode, wie lineare Zweipunkt-Kalibrierung oder lineare Mehrpunkt-Interpolation können verwendet werden. Weiters können Polynome höherer Ordnung für die Kalibrierung verwendet werden. Die resultierenden Kalibrierungsdaten können im Speicher des RFID-Chips gespeichert werden.

Wird nun der Sensor in der späteren Anwendung ausgelesen, kann nun die Genauigkeit der ausgelesenen Temperaturdaten mit Hilfe der Kalibrierungsdaten verbessert werden.

Eine andere wichtige Verbesserung der Sensorgenauigkeit kann durch die vorgeschlagene Methode erreicht werden in Bezug auf die sogenannten "out of limit" Zähler. Diese Zähler protokollieren wie oft die aufgezeichnete Temperatur über oder unter einer Grenze $T_{krit}$ ist. Bei einem perfekt kalibrierten Sensor, bei dem die gemessene Temperatur $T_{Messung}$ gleich der realen Temperatur $T_{Real}$ ist funktioniert diese Funktion einwandfrel. Es kann somit Speicherplatz der Temperaturdaten eingespart werden, indem nur aufgezeichnet wird, wenn eine Temperatur über oder unter einer vorhin eingestellten Grenze steigt beziehungsweise fällt. Es, werden die Zeitpunkte (beziehungsweise die Anzahl) protokolliert bei denen $T_{Real} = T_{Messung} > T_{krit}$. Soll die Unterschreitung detektiert werden, wird protokolliert falls, $T_{Real} = T_{Messung} < T_{krit}$

Bei einem realen Sensor, der jedoch eine systematische Abweichung von $\Delta T_{systematisch} = T_{Real} - T_{Messung}$ muss die kritische Temperaturschwelle angepasst werden, um bei der richten realen Temperatur den "out of limit" Zähler zu erhöhen. Also $T_{Real} = T_{Messung} + \Delta T_{systematisch} > T_{krit}$. Somit muss die kritische Temperatur auf $T_{krit,korrekt} = T_{krit} - \Delta T_{systematisch}$ angepasst werden. $\Delta T_{systematisch}$ ist aus der vorhin beschriebenen Temperaturkalibrierung bekannt.

Die Erfindung wird im Folgenden anhand von den in den Zeichnungen dargestellten Ausführungsbeispielen näher erläutert. Es zeigt dabei:

Fig. 1: RFID Temperatursensoren (2) in einem Klimaschrank (3) und einem RFID Sende/Lesegerät (1).

Fig. 2: Kalibration der der semipassiven-RFID Temperatursensoren (2) außerhalb eines Klimaschrankes.

Fig. 3: Kalibration der der semipassiven-RFID Transponder auf einem Förderband (3).

Fig. 4: Bestandteile eines RFID Temperatursensors (2).

Fig. 5: Abweichung der gemessenen Temperatur $T_{Messung,i}$ von der realen Temperatur $T_{Real,i}$ durch $\Delta T_i = T_{Messung,i} - T_{Real,i}$ dargestellt als Polynomfit.

Fig. 6: Abweichung der gemessenen Temperatur $T_{Messung,i}$ von der realen Temperatur $T_{Real,i}$ durch $\Delta T_i$ dargestellt als linearer Fit.

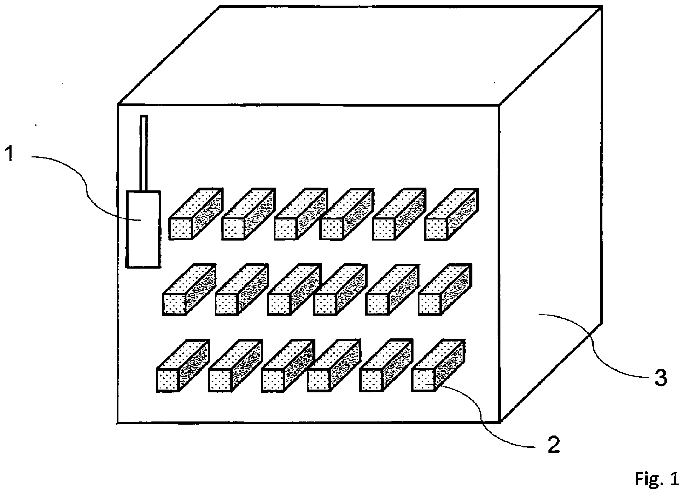

In Fig. 1 ist beispielsweise eine Anordnung gezeigt, wo RFID Temperatursensoren (2) In einen Klimaschrank (3) eingebracht sind. Der Klimaschrank erzeugt einen möglichst bekannten Temperaturverlauf als Funktion der Zeit.

Handelsübliche Klimaschränke erlauben Temperaturungenauigkeiten kleiner als 0.2 °C. Innerhalb des Klimaschrankes zeichnen die RFID Temperatursensoren Temperaturwerte $T_{\text{Messung},i}$ auf. Diese Temperaturdatenpunkte werden herangezogen um diese mit externen bekannten Temperaturdaten, wie Beispielsweise die Voreinstellung Im Klimaschrank oder durch einen kalibrierten Temperatursensor Im Klimaschrank ermittelte Temperaturdaten ($T_{\text{Real},i}$) zu vergleichen.

Dieser Vergleich kann entweder bereits im Klimaschrank oder nachdem die Sensoren aus dem Klimaschrank gebracht wurden stattfinden. Aus der Differenz der Temperaturpunkte zu möglichst gleichen Zeitpunkten werden Kalibrierungsdaten ermittelt, welche auf die Speicher der jeweiligen Sensoren geschrieben werden können.

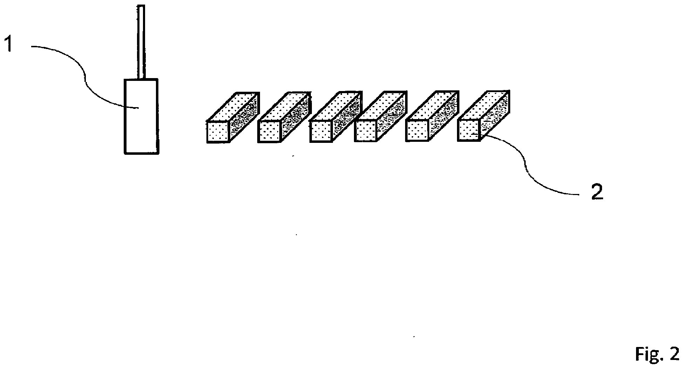

In Fig. 2 ist ein Beispiel gezeigt, wo nachdem die Sensoren aus dem Klimaschrank gebracht worden sind, durch Bulkerfassung ("Masseerfassung") der einzelne RFID Temperatursensoren, für jeden Sensor die jeweiligen Kalibrierungsdaten auf diesen geschrieben werden. Dadurch kann eine Vielzahl von Sensoren automatisch und mehr oder wenig gleichzeitig kalibriert werden und ein aufwendiges hantieren mit jedem einzelnen Sensor entfällt.

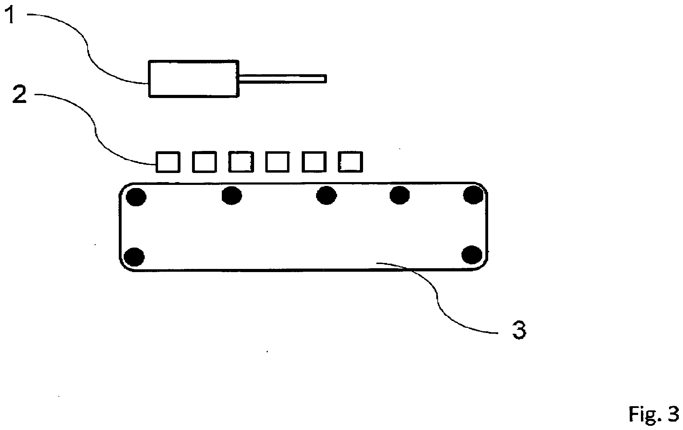

In Fig. 3 ist ein Beispiel gezeigt, wo die Sensoren kalibriert werden, indem Sie auf ein Förderband (3) gebracht werden. Diese Anordnung erlaubt die Sensoren zu kalibrieren, wenn nur eine kleine Anzahl von Sensoren durch Bulkerfassung angesprochen werden können.

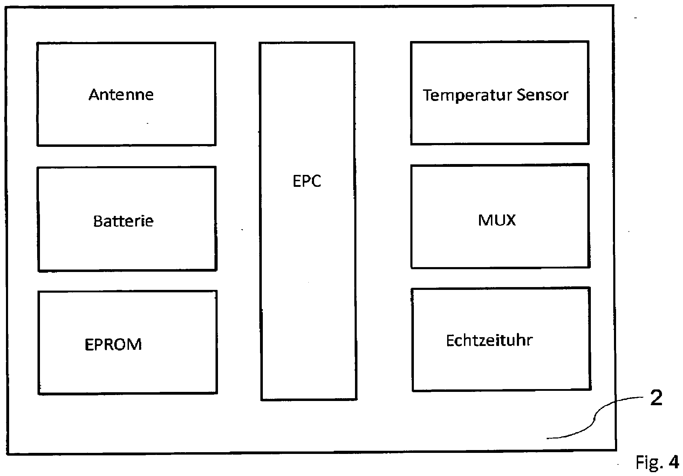

In Fig. 4 sind die typischen Bestandteile eines RFID Temperatursensors dargestellt. Dieser beinhaltet den Speicher, wie zum Beispiel EEPROM ("electrically erasable programmable read-only memory"), eine Batterie, eine Antenne, einen elektronischen Produktcode (EPC), einen Temperatursensor, einen Multiplexer und eine Echtzeituhr RTL ("real time clock"). Die Übertragungsfrequenz kann UHF (0.3 bis 3 GHz) oder HF (3 bis 30 MHz) sein, oder auch jede andere übliche Betriebsfrequenz.

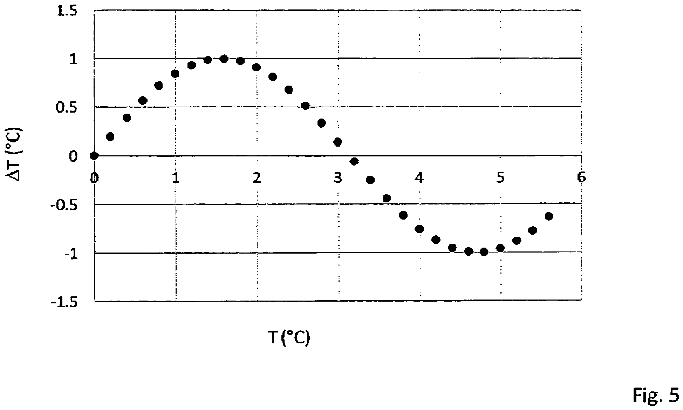

Fig. 5 zeigt die Abweichung $\Delta T$ der gemessenen Temperatur $T_{\text{Messung}}$ von der realen Temperatur $T_{\text{Real}}$. Diese abweichung kann minimiert werden, wenn die reale Temperatur T (kalibriert gemessen) von der gemessenen Temperatur U (gemessen mit dem ungenauen Sensor) als Polynom dargestellt wird. Aus N Messpunkten von $U$ und $T$ können die $N$ Koeffizienten a,b,c.. bestimmt werden.

$$T(U) = a + b \cdot U + c \cdot U^2 + d \cdot U^3 + e \cdot U^4 + \ldots \tag{1}$$

Die Temperaturdifferenz ist $\Delta T = T - U(T)$ wie in Fig. 5 gezeigt. Im Falle von einer linearen Interpolation reduziert sich dies auf

$$\begin{aligned} T_1 &= a + b \cdot U_1 \\ T_2 &= a + b \cdot U_2 \end{aligned} \tag{2}$$

wobei bei der Temperatur $T_1$ der Messwert $U_1$ gemessen wurde und bei Temperatur $T_2$ der Messwert $U_2$. Die Interpolationsparameter bestimmen sich nach Lösung des linearen Gleichungssystems zu,

$$\begin{aligned} a &= U_1 T_2 - U_2 T_1 \\ b &= \frac{T_1 - T_2}{G_1 - G_2} \end{aligned} \tag{3}$$

Existiert keine Abweichung ist $a$=0 und $b$=1.

Wird beispielsweise ein Polynom dritter Ordnung verwendet, muss die folgende Matrix invertiert werden.

$$\begin{pmatrix} T_1 \\ T_2 \\ T_3 \\ T_4 \end{pmatrix} = \begin{pmatrix} 1 & U_1 & U_1^2 & U_1^3 \\ 1 & U_2 & U_2^2 & U_2^3 \\ 1 & U_3 & U_3^2 & U_3^3 \\ 1 & U_4 & U_4^2 & U_4^3 \end{pmatrix} \begin{pmatrix} a \\ b \\ c \\ d \end{pmatrix} \tag{4}$$

Sind bei der Kalibration beispielsweise die folgenden Wertepaare bestimmt worden, wie In Tabelle 1 gezeigt, können durch Einsetzten in Gleichung (4) die Ausgleichparameter a,b,c und d bestimmt werden. Diese Parameter sind Beispiele von Kalibrierparameter. Diese Parameter können in den Speicher des Sensors geschrieben werden. Beim Auslesen der Temperaturwerte kann dadurch die Temperatur um $\Delta T$ korrigiert werden.

Tabelle 1: Gemessene Werte *U* und reale Temperatur *T*.

| T | U |
|---|---|
| 3.0 | 3.1 |
| 4.9 | 5.2 |
| 5.5 | 5.8 |
| 6.4 | 6.7 |

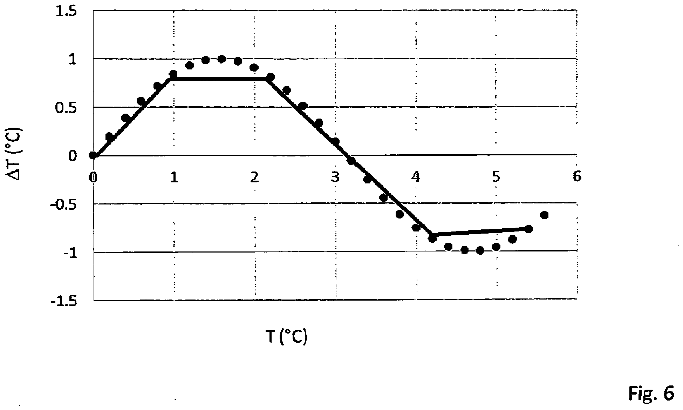

In Fig. 6 ist eine Temperaturkalibrierung mit stückweisen Polynomen gezeigt. In diesem Fall ist das Polynom linear. Der Vorteil von stückweisen Polynomen ist, dass ein Überschwingen auf Grund von Polynomen höherer Ordnung vermieden werden kann.

Neben der Kalibration der Temperatur kann auch die interne Zeit $t_{Messung,i}$ eines RFI D Chips kalibriert werden, die mittels einer "real time clock" bestimmt wird. Eine akkurate Zeit ($t_{Real,i}$) Ist essentiell um die genauen Zeiten der Temperaturmesspunkte bestimmen zu können. Ist der Zeitpunkt bekannt, wann die Temperaturaufzeichnung begonnen hat und ist ebenfalls die Zeit bekannt, wenn der letzte Datenpunkt geschrieben worden ist, kann die Zeitspanne mit der externen Zeitspanne verglichen werden. Der Quotient der Zeitspannen ergibt den Korrekturfaktor um die die Daten von RTC zu kalibrieren sind.

## Patentansprüche

1. Methode zur Kalibrierung von drahtlos auslesbaren RFID Temperatursensoren (2), welche einen Speicher und einen Temperatursensor besitzen **dadurch gekennzeichnet, dass**

   (i) der RFID Temperatursensor zu einem oder mehr Zeitpunkten Temperaturwerten $T_{Messung,i}$ auf den internen Speicher ablegt (ii) der Sensor einem bekannten Temperaturprofil $T_{Real,i}$ als Funktion der Zeit ausgesetzt wird, die gespeicherten Temperaturwerten $T_{Messung,i}$ durch ein Lesegerät via RF drahtlos ausgelesen werden (iii) und diese drahtlos ausgelesenen Messdaten $T_{Messung,i}$ mit vorgegebenen $T_{Real,i}$ bei einem oder mehr Zeitpunkten herangezogen werden um ein oder mehr Temperaturkalibrierungsdaten a zu ermittelten, welche auf den Speicher des Sensors drahtlos via RF übermittelt werden, wobei die $a_i$ verwendet werden um aus $T_{Messung,i}$ kalibrierte Temperaturdaten zu ermitteln.

2. Methode nach Anspruch 1, **dadurch gekennzeichnet, dass** die RFID Übertragungsfrequenz bei der Ermittlung der Temperaturdaten zwischen 0.3 GHz und 3 GHz liegt.

3. Methode nach Anspruch 1, **dadurch gekennzeichnet, dass** die RFID Übertragungsfrequenz bei der Ermittlung der Temperaturdaten zwischen 3 MHz und 30 MHz liegt.

4. Methode nach Anspruch 1, **dadurch gekennzeichnet, dass** zusätzlich zu den Temperaturwerten auch Zeitpunkte auf den Speicher abgelegt werden, welche aus der "real time clock" des Sensors bestimmt werden.

5. Methode nach Anspruch 1, **dadurch gekennzeichnet, dass** die Temperaturwerte auf einen EEPROM gespeichert werden.

6. Methode nach Anspruch 1, **dadurch gekennzeichnet, dass** das bekannten Temperaturprofil $T_{Real,i}$ als Funktion der Zeit durch einen Klimaschrank realisiert wird.

7. Methode nach Anspruch 1, **dadurch gekennzeichnet, dass** das bekannten Temperaturprofil $T_{real,i}$ als Funktion der Zeit realisiert wird, indem die Sensoren in einem Behälter eingebracht sind, welcher einen mittleren Wärmedurchgangskoeffizienten kleiner als 1.0 W/(m$^2$K).

8. Methode nach Anspruch 1, **dadurch gekennzeichnet, dass** sich mehr als ein RFID Temperatursensor in der Lese und Schreibreichweite eines RFID Lese/Schreibgeräts befinden und bei mehr als einem RFID Temperatursensor die gespeicherten $T_{Messung,i}$ ausgelesen werden und mit einem bekannten Temperaturprofil $T_{Real,i}$ als Funktion der Zeit in Relation gesetzt werden und daraus Kalibrierungsdaten berechnet werden, welche in die Speicher der einzelnen RFID Temperatursensor geschrieben werden.

Fig. 1

1

2

Fig. 2

Fig. 3

Fig. 4

T (°C)

Fig. 5

Fig. 6

Europäisches
Patentamt

European
Patent Office

Office européen
des brevets

## EUROPÄISCHER RECHERCHENBERICHT

Nummer der Anmeldung

EP 17 00 0573

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | US 2015/110147 A1 (MIZUNO YOSHIRO [JP]) 23. April 2015 (2015-04-23) * Zusammenfassung * * Absätze [0103] - [0126] * ----- | 1-8 | INV. G01K15/00 |
| A,D | WO 2009/138893 A1 (NXP BV [NL]; HUMBERT AURELIE [NL]; CURATOLA GILBERTO [NL]; MERZ MATTHI) 19. November 2009 (2009-11-19) * Zusammenfassung * * das ganze Dokument * ----- | 1-8 | |
| A | US 2009/278685 A1 (POTYRAILO RADISLAV ALEXANDROVICH [US] ET AL) 12. November 2009 (2009-11-12) * Zusammenfassung * * Absätze [0064] - [0070] * * Abbildung 8 * ----- | 1-8 | |

RECHERCHIERTE SACHGEBIETE (IPC)

G01K

Der vorliegende Recherchenbericht wurde für alle Patentansprüche erstellt

| Recherchenort | Abschlußdatum der Recherche | Prüfer |
|---|---|---|
| Den Haag | 8. September 2017 | Bagnera, Carlo |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes
   Dokument

EPO FORM 1503 03.82 (P04C03)

EP 3 385 689 A1

**ANHANG ZUM EUROPÄISCHEN RECHERCHENBERICHT
ÜBER DIE EUROPÄISCHE PATENTANMELDUNG NR.**

EP 17 00 0573

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-09-2017

| Im Recherchenbericht angeführtes Patentdokument | Datum der Veröffentlichung | Mitglied(er) der Patentfamilie | Datum der Veröffentlichung |
|---|---|---|---|
| US 2015110147 A1 | 23-04-2015 | EP 2952864 A1<br>JP 5335155 B1<br>JP 2014224681 A<br>US 2015110147 A1<br>WO 2014119518 A1 | 09-12-2015<br>06-11-2013<br>04-12-2014<br>23-04-2015<br>07-08-2014 |
| WO 2009138893 A1 | 19-11-2009 | US 2011301903 A1<br>WO 2009138893 A1 | 08-12-2011<br>19-11-2009 |
| US 2009278685 A1 | 12-11-2009 | EP 2274708 A1<br>JP 6162925 B2<br>JP 2011524974 A<br>US 2009278685 A1<br>WO 2009139702 A1 | 19-01-2011<br>12-07-2017<br>08-09-2011<br>12-11-2009<br>19-11-2009 |

Für nähere Einzelheiten zu diesem Anhang : siehe Amtsblatt des Europäischen Patentamts, Nr.12/82

EPO FORM P0461

14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2015110147 A1
- WO 2009138893 A1
- WO 03098175 A1
- EP 2083254 A1
- DE 19622671 A1

**In der Beschreibung aufgeführte Nicht-Patentliteratur**

- *Applied Physics Letters,* 2012, vol. 101 (4), 042412